# FASCICULE DE BREVET EUROPEEN

(11) **EP 1 651 787 B1**
(45) Date de publication et mention de la délivrance du brevet: **12.09.2007**
(21) Numéro de dépôt: 04767594.7
(22) Date de dépôt: 07.07.2004
(51) Int. Cl.: C22C 21/02, C22C 21/04, F16J 10/00, F02F 1/24

(54) **PIECE MOULEE EN ALLIAGE D'ALUMINIUM AL-SI-CU A HAUTE RESISTANCE A CHAUD**
FORMTEIL AUS AL-SI-CU-ALUMINIUMLEGIERUNG MIT HOHER WARMVERARBEITUNGSBESTÄNDIGKEIT
MOULDED AL-SI-CU ALUMINIUM ALLOY COMPONENT WITH HIGH HOT-PROCESS RESISTANCE

(30) Priorité: 10.07.2003 FR 0308438
(43) Date de publication de la demande: 03.05.2006
(73) Titulaire: ALUMINIUM PECHINEY, 38340 Voreppe (FR)
(72) Inventeur: LASLAZ, Gérard, 38570 Le Cheylas (FR); GARAT, Michel, 38430 Moirans (FR)
(74) Mandataire: Marsolais, Richard
(86) Numéro de dépôt international: PCT/FR2004/001759
(87) Numéro de publication internationale: WO 2005/007911

(56) Documents cités:
- WO-A-20/04001079
- FR-A- 2 690 927
- GB-A- 605 282
- US-A- 4 077 810
- US-A- 4 163 266
- PATENT ABSTRACTS OF JAPAN vol. 0142, no. 36 (C-0720), 18 mai 1990 (1990-05-18) -& JP 02 061025 A (KOBE STEEL LTD), 1 mars 1990 (1990-03-01)
- PATENT ABSTRACTS OF JAPAN vol. 0161, no. 80 (C-0935), 30 avril 1992 (1992-04-30) -& JP 04 021728 A (FURUKAWA ALUM CO LTD), 24 janvier 1992 (1992-01-24)

## Description

### Domaine de l'invention

L'invention concerne les pièces moulées en alliage d'aluminium soumises à des contraintes thermiques et mécaniques élevées, notamment les culasses de moteurs à combustion interne, et plus particulièrement de moteurs turbo-chargés à essence ou diesel.

### Etat de la technique

Dans la fabrication des culasses de moteurs, on utilise habituellement deux familles d'alliages d'aluminium :
1) les alliages contenant de 5 à 9% de silicium, de 3 à 4% de cuivre et du magnésium. Il s'agit le plus souvent d'alliages de seconde fusion, avec des teneurs en fer comprises entre 0,5 et 1%, et des teneurs en impuretés, notamment en manganèse, zinc, plomb, étain ou nickel, assez élevées. Ces alliages sont généralement utilisés sans traitement thermique (état F) ou simplement stabilisés (état T5). Ils sont plutôt destinés à la fabrication de culasses de moteurs à essence assez peu sollicités thermiquement. Pour les pièces plus sollicitées destinées aux moteurs diesel ou turbo-diesel, on utilise des alliages de première fusion, avec une teneur en fer inférieure à 0,3%, traités thermiquement à l'état T6 (revenu au pic de résistance mécanique) ou T7 (sur-revenu).
2) les alliages de première fusion contenant de 7 à 10% de silicium et du magnésium, traités à l'état T6 ou T7, pour les pièces les plus sollicitées comme celles destinées aux moteurs turbo-diesel.

Ces deux grandes familles d'alliages conduisent à des compromis différents entre les diverses propriétés d'emploi : résistance mécanique, ductilité, tenue au fluage et à la fatigue. Cette problématique a été décrite par exemple dans l'article de R. Chuimert et M. Garat : « Choix d'alliages d'aluminium de moulage pour culasses Diesel fortement sollicitées », paru dans la Revue SIA de mars 1990. Cet article résume ainsi les propriétés de 3 alliages étudiés :
- Al-Si5Cu3MgFe0,15 T7 : bonne résistance - bonne ductilité
- Al-Si5Cu3MgFe0,7 F : bonne résistance - faible ductilité
- Al-Si7Mg0,3Fe0,15 T6 : faible résistance - extrême ductilité

La première et la troisième combinaison alliage-état peuvent être utilisées pour les culasses fortement sollicitées. Cependant, on a continué à rechercher un compromis amélioré entre résistance et ductilité. Le brevet FR 2690927 au nom de la demanderesse, déposé en 1992, décrit des alliages d'aluminium résistant au fluage contenant de 4 à 23% de silicium, au moins l'un des éléments magnésium (0,1 - 1%), cuivre (0,3 - 4,5%) et nickel (0,2 - 3%), et de 0,1 à 0,2% de titane, de 0,1 à 0,2% de zirconium et de 0,2 à 0,4% de vanadium. On observe une amélioration de la tenue au fluage à 300°C sans perte notable de l'allongement mesuré à 250°C.

L'article de F. J. Feikus « Optimization of Al-Si cast alloys for cylinder head applications » AFS Transactions 98-61, pp. 225-231, étudie l'ajout de 0,5% et 1% de cuivre à un alliage AlSi7Mg0,3 pour la fabrication de culasses de moteurs à combustion interne. Après un traitement T6 classique comportant une mise en solution de 5 h à 525°C, suivi d'une trempe à l'eau froide et d'un revenu de 4 h à 165°C, il n'observe aucun gain en limite d'élasticité, ni en dureté à température ambiante, mais à des températures d'utilisation au-delà de 150°C, l'ajout de cuivre apporte un gain significatif de limite d'élasticité et de résistance au fluage.

Le document US-A-4077810 divulgue une pièce moulée de composition en pourcentage pondéral de 8 à 15 % Si, de 0,05 à 0,7 % Mg, de 1 à 4,5 % Cu, reste Al.

La demande de brevet FR 2841164 déposée par la demanderesse, décrit une pièce moulée à haute résistance au fluage, notamment une culasse ou un carter de moteur, en alliage de la composition (% en poids) :

| | | |
|---|---|---|
| Si : 5 -11 | et de préférence | 6,5 - 7,5 |
| Fe < 0,6 | et de préférence | < 0,3 |
| Mg : 0,15 - 0,6 | « « | 0,25 - 0,5 |
| Cu : 0,3 - 1,5 | « « | 0,4 - 0,7 |
| Ti : 0,05 - 0,25 | « « | 0,08 - 0,20 |
| Zr : 0,05 - 0,25 | « « | 0,12-0,18 |
| Mn < 0,4 | « « | 0,1 - 0,3 |
| Zn < 0,3 | « « | < 0,1 |
| Ni < 0,4 | « « | < 0,1 |

Le but de la présente invention est d'améliorer encore la résistance mécanique et la tenue au fluage, dans le domaine de température 230-380°C, de pièces soumises localement à de hautes températures, en particulier les culasses (pontets inter-soupapes).

### Objet de l'invention

L'invention a pour objet une pièce moulée à haute résistance mécanique à chaud et haute résistance au fluage dans le domaine de température 230-380°C, en alliage d'aluminium de composition (% en poids) :

| | | |
|---|---|---|
| Mg < 0,1 | et de préférence | < 0,03 |
| Si : 4.5 - 10 | | |
| Cu : 2,0 - 5,0 | de préférence | 3,0 - 4,0 |
| Ni < 0,4 | « « | < 0,1 |
| Ti : 0,05 - 0,25 | « « | 0,08 - 0,20 |
| Zr : 0,05 - 0,25 | « « | 0,12 - 0,20 |
| Fe < 0,9 | et de préférence | < 0,3 |
| Zn < 0,3 | « « | < 0,1 |

éventuellement
V : 0.02-0.30 de préférence 0,04-0,20
Mn : 0,1 - 0,5 de préférence 0.15-0.40
Hf, Nb, Ta, Cr, Mo et/ou W : 0,03 - 0,30
autres éléments < 0,10 chacun et < 0,30 au total, balance aluminium.

### Description de l'invention

L'invention repose sur la constatation par la demanderesse qu'il est possible d'obtenir des propriétés de tenue à chaud, notamment entre 230°C et 380°C, nettement améliorées par rapport aux alliages existants sans perte de ductilité, en associant dans un alliage de moulage de type Al-Si un durcissement structural basé sur une addition de 2 à 5% de cuivre sans magnésium, et une addition de 0.05 à 0.25% de zirconium.

Les inventeurs émettent l'hypothèse que les bonnes propriétés mécaniques à chaud des pièces traitées thermiquement résultent d'une microstructure comportant simultanément des phases de dispersoïdes au zirconium formées au cours de la mise en solution et de phases métastables au cuivre θ' - θ" dérivées du système de précipitation Al₂Cu. Ces phases sont plus stables à chaud que les phases binaires β'β" à base de Mg₂Si et les phases quaternaires λ'λ" AlCuMgSi, qui se forment au revenu en présence de magnésium.

Par le choix de la teneur en cuivre, il est possible d'accéder à des compromis différents entre les propriétés mécaniques à chaud et la ductilité. Ainsi, il est possible avec les alliages selon l'invention d'obtenir une ductilité aussi bonne que celle d'alliages très ductiles comme l'A-S7G, en limitant la teneur en cuivre au bas de l'intervalle 2 - 5%.

Comme la plus grande partie des alliages destinés à la fabrication des culasses de moteurs, le fer est maintenu en dessous de 0,9%, ce qui veut dire qu'il peut s'agir d'alliages de première ou de deuxième fusion ; cette limite peut être abaissée en dessous de 0.3% (première fusion), et de préférence en dessous de 0,2% lorsqu'on souhaite un allongement à la rupture élevé.

L'alliage doit contenir du zirconium à une teneur comprise entre 0,05 et 0,25%, et de préférence à une teneur comprise entre 0,12 et 0,20% pour obtenir une teneur optimale de dispersoïdes après traitement thermique.

La teneur en titane est maintenue entre 0,05 et 0,25%, ce qui est assez habituel pour ce type d'alliage. Le titane contribue à l'affinage du grain primaire lors de la solidification, mais, dans le cas des alliages selon l'invention, il contribue aussi, en liaison avec le zirconium, à la formation, lors de la mise en solution de la pièce moulée, de dispersoïdes très fins (< 1 µm) AlSiZrTi situés à coeur de la solution solide α-Al et qui sont stables au-delà de 300°C, contrairement aux phases du durcissement structural au cuivre, dont la coalescence, bien que moindre que celle des phases au magnésium, devient conséquente à ce niveau de température.

L'alliage peut comporter également du vanadium à une teneur comprise entre 0,02 et 0,30%, et de préférence entre 0,04 et 0,20%, ainsi que d'autres éléments péritectiques, tels que le hafnium, le niobium, le tantale, le chrome, le molybdène ou le tungstène, à une teneur comprise entre 0,03 et 0,30%. Ces éléments, du fait de leur courbe de solubilité et de leur faible coefficient de diffusion dans l'aluminium, forment également à la mise en solution des dispersoïdes stables à haute température.

A une teneur de plus de 0,1%, le manganèse a un effet positif sur la résistance mécanique entre 250°C et 380°C, mais cet effet plafonne au-delà d'une teneur de 0,5%.

Contrairement aux alliages pour culasses où la présence de magnésium est habituellement souhaitée ou admise, les alliages des pièces selon l'invention ont une température de solidus et une température de brûlure supérieures à 507°C. Elles peuvent de ce fait être traitées thermiquement à l'état T6 ou T7 avec une température de mise en solution comprise entre 515 et 525°C selon la teneur en cuivre, et ce sans précaution particulière, c'est-à-dire sans nécessité d'une montée en température lente ou d'un palier intermédiaire, alors que les alliages du même type à plus de 0,2% de magnésium forment un eutectique quaternaire invariant avec le risque d'une brûlure à 507°C.

La possibilité d'effectuer un traitement thermique à plus de 515°C présente plusieurs avantages : on peut obtenir une homogénéisation plus poussée des phases au cuivre, une meilleure globulisation des phases au silicium et une précipitation plus complète des phases au zirconium et autres éléments péritectiques.

Enfin, un autre intérêt de ce type de composition est leur moindre sensibilité à la vitesse de trempe après mise en solution que les alliages type Al-Si-Mg et les Al-Si-Cu-Mg. En effet, bien que trempables à l'eau selon les techniques usuelles, ces alliages offrent des possibilités accrues de trempe adoucie (eau pulvérisée, trempe en lit fluidisé, trempe par air pulsé) avec des pertes relatives de propriétés mécaniques très inférieures à celles des alliages traditionnels avec magnésium.

Les pièces sont fabriquées par les procédés habituels de moulage, notamment le moulage en coquille par gravité et le moulage basse pression pour les culasses, mais également le moulage au sable, le squeeze casting (en particulier dans le cas d'insertion de composites) et le moulage à mousse perdue (lost foam).

Ces pièces peuvent également être utilisées comme inserts pour les parties chaudes d'une pièce en alliage traditionnel, ou pour les parties chaudes de pièces réalisées en deux alliages différents (« dual casting »).

Le traitement thermique comporte une mise en solution typiquement de 1 à 10 h à une température comprise entre 515 et 525°C, une trempe de préférence à l'eau froide ou une trempe adoucie, et un revenu de 0,5 à 10 h à une température comprise entre 150 et 250°C. La température et la durée du revenu sont ajustées de manière à obtenir, soit un revenu au pic de résistance mécanique (T6), soit un sur-revenu (T7) fréquemment utilisé pour les culasses de moteurs.

Les pièces selon l'invention, et notamment les culasses de moteurs d'automobile ou d'avion, les carters, volutes et autres équipements pour l'aéronautique soumis à des températures élevées, présentent une excellente résistance mécanique à chaud, une résistance au fluage supérieure à celles des pièces de l'art antérieur dans le domaine de température 230-380°C, et peuvent, en cas de limitation de la teneur en cuivre, présenter une excellente ductilité. A contrario, les performances mécaniques à température ambiante ou modérée sont légèrement inférieures à celles des alliages Al-Si-Cu-Mg.

### Exemple

On a élaboré dans le creuset en carbure de silicium d'un four électrique 100 kg de 10 alliages dont la composition (poids %) est indiquée au tableau 1. Ces compositions ont été mesurées par spectrométrie d'émission par étincelle, sauf pour le cuivre et le zirconium, qui ont été mesurés par spectrométrie d'émission à plasma induit.

**Tableau 1**

| alliage | Si | Fe | Cu | Mg | Mn | Zr | V | Ti |
|---|---|---|---|---|---|---|---|---|
| 1 | 5 | 0,15 | 3,1 | 0,30 | | | | 0,10 |
| 2 | 5 | 0,15 | 3,1 | 0,30 | | 0,14 | 0,25 | 0,10 |
| 3 | 7 | 0,15 | | 0,30 | | | | 0,10 |
| 4 | 7 | 0,15 | | 0,30 | 0,12 | 0,14 | 0,15 | 0,10 |
| 5 | 7 | 0,15 | 0,5 | 0,38 | | | | 0,10 |
| 6 | 7 | 0,15 | 0,5 | 0,38 | | 0,14 | | 0,10 |
| 7 | 5 | 0,15 | 4,1 | < 0,05 | 0,15 | 0,14 | 0,25 | 0,14 |
| 8 | 7 | 0,15 | 3,0 | <0,05 | 0,20 | 0,14 | 0,25 | 0,14 |
| 9 | 7 | 0,15 | 2,4 | <0,05 | 0,19 | 0,14 | 0,25 | 0,14 |

On a coulé des éprouvettes coquille de traction AFNOR de chaque alliage. Ces éprouvettes ont été soumises à un traitement thermique comportant une mise en solution dans les conditions indiquées au tableau 2, une trempe à l'eau froide, une maturation à la température ambiante de 24 h et un revenu de 5 h à 160°C ou à 200°C.

A partir de ces éprouvettes, on a usiné des éprouvettes de traction et des éprouvettes de fluage de manière à mesurer les caractéristiques mécaniques (résistance à la rupture Rₘ en MPa, limite d'élasticité R_{p0,2} en MPa et allongement à la rupture A en %) à la température ambiante, à 250°C et à 300°C. Les résultats sont indiqués au tableau 2 :

**Tableau 2**

| | 20°C | | | 250°C | | | 300°C | | |
|---|---|---|---|---|---|---|---|---|---|
| Alliage | Rₘ | R_{p0,2} | A | Rₘ | R_{p0,2} | A | Rₘ | R_{p0,2} | A |
| 1 | 358 | 311 | 2,5 | 111 | 92 | 16 | 62 | 47 | 30 |
| 3 | 299 | 257 | 9,9 | 61 | 55 | 35 | 43 | 40 | 34 |
| 4 | 294 | 255 | 9,7 | 62 | 56 | 35 | 43 | 41 | 34 |
| 5 | 327 | 275 | 9,8 | 73 | 66 | 35 | 44 | 40 | 35 |
| 6 | 324 | 270 | 9,8 | 68 | 63 | 35 | 45 | 42 | 35 |
| 7 | 367 | 287 | 1,9 | 126 | 103 | 16 | 72 | 63 | 23 |
| 8 | 313 | 165 | 12,3 | 100 | 80 | 33 | 64 | 54 | 34 |
| 9 | 281 | 140 | 15,3 | 94 | 75 | 37 | 60 | 51 | 44 |

| | | | | | | | | | |
|---|---|---|---|---|---|---|---|---|---|
| mise en solution 10h 495°C, trempe eau froide, revenu 4h 1,2 210°C 3, 4 mise en solution 10h 540°C trempe eau froide 24h attente -revenu 4h 210°C mise en solution 4h 500°C+ 10h540°C, trempe eau froide, 24h attente, -revenu 4h 5-6 210°C 7, 8, 9 mise en solution 10h 515°C trempe eau froide revenu 4h 210°C 7 bis mise en solution 10h 495°C trempe eau froide revenu 4h 210°C | | | | | | | | | |

Contrairement aux alliages classiques 1 et 2 au cuivre et avec magnésium, dont le traitement thermique ne peut être réalisé qu'à des températures de l'ordre de 495°C du fait des risques de brûlure à 507°C, les alliages 7, 8 et 9 selon l'invention avec cuivre sans magnésium et contenant du zirconium ont pu être traités avec une mise en solution à 515°C.

Pour ces alliages 7 à 9, les résultats montrent des niveaux de limite élastique et de résistance à la rupture à 250°C et 300°C très nettement supérieurs à ceux des alliages 1 et 2 de l'art antérieur. Ainsi, la limite élastique des éprouvettes en alliages 7 à 9 dépasse 50 MPa, alors que celle des éprouvettes en alliages 1 à 6 sont très en deçà de ce niveau.

On met en évidence les mêmes effets dans les résultats des essais de fluage à 250 et 300°C à l'aide du coefficient σ^{0.1%} ₁₀₀ₕ représentant la contrainte (en MPa) conduisant à une déformation de 0,1% après 100 h d'exposition à ces températures. Les résultats sont indiqués au tableau 3.

**Tableau 3**

| Alliage | σ 250°C | σ 300°C |
|---|---|---|
| 1 | 60 | 26 |
| 2 | 61 | 28 |
| 3 | 39 | 22 |
| 4 | 40 | 24 |
| 5 | 39 | 22 |
| 6 | 41 | 22 |
| 7 | 53 | 32 |
| 7 bis | | 29 |

L'essai de fluage à 300°C sur l'éprouvette 7 a donné une résistance au fluage de 32 MPa, nettement supérieure à celle mesurée sur les éprouvettes en alliages 1 à 6 contenant du magnésium.

On constate qu'à traitement thermique identique à 495°C, l'éprouvette 7 bis conduit à une résistance au fluage de 29 MPa, soit un niveau déjà légèrement supérieur à celui des alliages 1 et 2 avec magnésium, contenant ou non du zirconium. Le traitement thermique à 515°C sur l'éprouvette 7 permet une augmentation supplémentaire de 3 MPa.

Enfin, outre les excellents niveaux de résistance à chaud, les résultats de l'éprouvette 8 indiquent qu'on accède, avec une teneur en cuivre de l'ordre de 3%, à des valeurs élevées d'allongement à la rupture, du même niveau et même parfois meilleures que celles obtenues avec les alliages au magnésium les plus ductiles 3 à 6. A ductilité égale, les éprouvettes selon l'invention présentent une augmentation de la limite d'élasticité R_{p0,2} d'environ 20% à 250°C et 30% à 300°C.

## Revendications

1. Pièce moulée à haute résistance au fluage en alliage de composition (% en poids) :
Mg < 0,1
Si : 4,5 - 10
Cu : 2,0 - 5,0
Ni < 0,4
Fe < 0,9
Zn < 0,3
Ti : 0,05 - 0,25
Zr : 0,05 - 0,25
éventuellement :
V : 0,02-0,30
Mn : 0,1 - 0,5
Hf, Nb, Ta, Cr, Mo et/ou W : 0,03 - 0,30
autres éléments d'impuretés < 0,10 chacun et 0,30 au total, reste aluminium.

2. Pièce moulée selon la revendication 1, **caractérisée en ce que** la teneur en magnésium est inférieure à 0,03%.

3. Pièce moulée selon l'une des revendications 1 ou 2, **caractérisée en ce que** la teneur en cuivre est comprise entre 3 et 4%.

4. Pièce moulée selon l'une des revendications 1 à 3, **caractérisée en ce que** la teneur en nickel est inférieure à 0,1 %

5. Pièce moulée selon l'une des revendications 1 à 4, **caractérisée en ce que** la teneur en fer est inférieure à 0,3%.

6. Pièce moulée selon l'une des revendications 1 à 5, **caractérisée en ce que** la teneur en zinc est inférieure à 0, 1 %

7. Pièce moulée selon l'une des revendications 1 à 6, **caractérisée en ce que** la teneur en zirconium est comprise entre 0,12 et 0,20%.

8. Pièce moulée selon l'une des revendications 1 à 7, **caractérisée en ce que** la teneur en titane est comprise entre 0,08 et 0,20%.

9. Pièce moulée selon l'une des revendications 1 à 8, **caractérisée en ce que** la teneur en vanadium est comprise entre 0,04 et 0,20%.

10. Pièce moulée selon l'une des revendications 1 à 9, **caractérisée en ce que** la teneur en manganèse est comprise entre 0,15 et 0,40%.

11. Pièce moulée selon l'une des revendications 1 à 10, **caractérisée en ce qu'**elle est un insert pour partie chaude d'une pièce moulée.

12. Pièce moulée selon l'une des revendications 1 à 10, **caractérisée en ce qu'**elle est une culasse de moteur à combustion interne.

## Claims

1. Cast part with high creep resistance, made from an alloy with the following composition (% by weight):
Mg < 0.1
Si: 4.5 - 10
Cu: 2.0 - 5.0
Ni < 0.4
Fe < 0.9
Zn < 0.3
Ti: 0.03 - 0.25
Zr: 0.05 - 0.25
Possibly
V: 0.02 - 0.30
Mn: 0.1 - 0.5
Hf, Nb, Ta, Cr, Mo and/or W: 0.03 - 0.30
other impurity elements < 0.10 each and < 0.30 total, the remainder being aluminium.

2. Cast part according to claim 1, **characterised in that** the magnesium content is less than 0.03%.

3. Cast part according to either claim 1 or 2, **characterised in that** the copper content is between 3% and 4%.

4. Cast part according to one of claims 1 to 3, **characterised in that** the nickel content is less than 0.1%.

5. Cast part according to one of claims 1 to 4, **characterised in that** the iron content is less than 0.3%.

6. Cast part according to one of claims 1 to 5, **characterised in that** the zinc content is less than 0.1%.

7. Cast part according to one of claims 1 to 6, **characterised in that** the zirconium content is between 0.12% and 0.20%.

8. Cast part according to one of claims 1 to 7, **characterised in that** the titanium content is between 0.08% and 0.20%.

9. Cast part according to one of claims 1 to 8, **characterised in that** the vanadium content is between 0.04% and 0.20%.

10. Cast part according to one of claims 1 to 9, **characterised in that** the manganese content is between 0.15% and 0.40%.

11. Cast part according to one of claims 1 to 10, **characterised in that** it is an insert for a hot part of a cast part.

12. Cast part according to one of claims 1 to 10, **characterised in that** it is a cylinder head for an internal combustion engine.

## Patentansprüche

1. Formteil mit hoher Kriechfestigkeit aus einer Legierung mit der Zusammensetzung (Gew.-%):
Mg < 0,1
Si: 4,5 - 10
Cu: 2,0 - 5,0
Ni < 0,4
Fe<0,9
Zn < 0,3
Ti: 0,03 - 0,25
Zr: 0,05 - 0,25
eventuell:
V: 0,02 - 0,30
Mn: 0,1 - 0,5
Hf, Nb, Ta, Cr, Mo und/oder W: 0,03 - 0,30
weitere Verunreinigungselemente jeweils < 0,10 und insgesamt 0,30, Rest Aluminium.

2. Formteil nach Anspruch 1, **dadurch gekennzeichnet, dass** der Gehalt an Magnesium unterhalb 0,03 % liegt.

3. Formteil nach einem der Ansprüche 1 oder 2, **dadurch gekennzeichnet, dass** der Gehalt an Kupfer im Bereich von 3 bis 4 % liegt.

4. Formteil nach einem der Ansprüche 1 bis 3, **dadurch gekennzeichnet, dass** der Gehalt an Nickel unterhalb 0,1 % liegt.

5. Formteil nach einem der Ansprüche 1 bis 4, **dadurch gekennzeichnet, dass** der Gehalt an Eisen unterhalb 0,3 % liegt.

6. Formteil nach einem der Ansprüche 1 bis 5, **dadurch gekennzeichnet, dass** der Gehalt an Zink unterhalb 0,1 % liegt.

7. Formteil nach einem der Ansprüche 1 bis 6, **dadurch gekennzeichnet, dass** der Gehalt an Zirconium im Bereich von 0,12 bis 0,20 % liegt.

8. Formteil nach einem der Ansprüche 1 bis 7, **dadurch gekennzeichnet, dass** der Gehalt an Titan im Bereich von 0,08 bis 0,20 % liegt.

9. Formteil nach einem der Ansprüche 1 bis 8, **dadurch gekennzeichnet, dass** der Gehalt an Vanadium im Bereich von 0,04 bis 0,20 % liegt.

10. Formteil nach einem der Ansprüche 1 bis 9, **dadurch gekennzeichnet, dass** der Gehalt an Mangan im Bereich von 0,15 bis 0,40 % liegt.

11. Formteil nach einem der Ansprüche 1 bis 10, **dadurch gekennzeichnet, dass** es ein Einsatzteil für einen Warmbereich eines Formteils ist.

12. Formteil nach einem der Ansprüche 1 bis 10, **dadurch gekennzeichnet, dass** es ein Zylinderkopf eines Verbrennungsmotors ist.
